# EUROPÄISCHE PATENTANMELDUNG

(11) **EP 1 612 164 A1**
(43) Veröffentlichungstag der Anmeldung: **04.01.2006**
(21) Anmeldenummer: 05013765.2
(22) Anmeldetag: 25.06.2005
(51) Int. Cl.: B65G 57/00

(54) **Vorrichtung und Verfahren zum Einbringen von Zwischenlagen beim Palettieren**

(30) Priorität: 28.06.2004 DE 102004031301
(71) Anmelder: Winkler + Dünnebier Aktiengesellschaft, 56564 Neuwied (DE)
(72) Erfinder: Salm, Thomas, Dr.-Ing., 52074 Aachen (DE); Kutsch, Bernfried, Dipl.-Ing., 52224 Stolberg (DE)

(57) **Zusammenfassung**

Vorrichtung und Verfahren zum Einbringen von Zwischenlagen (7) beim Palettieren von Gegenständen auf Paletten mit einem ersten Arbeitsbereich (3) zur Aufnahme einer Zwischenlage und einem zweiten Bereich (4) zum Ablegen einer Zwischenlage, wobei in dem ersten Arbeitsbereich einer Schwenkvorrichtung (1) eine Zwischenlage (7) von einer Hubvorrichtung (2) in eine Zentriervorrichtung (10) gehoben wird, von dieser zentriert und anschließend von einer Haltevorrichtung (9) übernommen wird, in welcher bei vorhandenen Seitenklappen (19) diese von der Faltvorrichtung (11) gefaltet werden können, um dann nach dem Zentrieren oder Zentrieren und Falten wieder von dem Hubwerk (2) übernommen zu werden, und in den zweiten Arbeitsbereich (4) bewegt und mittels der Hubvorrichtung (2) auf die dort vom Palettierautomaten (25) gestapelten Verpackungsschachteln (12) legt wird.

## Beschreibung

### I. Anwendungsgebiet

Die vorliegende Erfindung betrifft eine Vorrichtung zum Einbringen von Zwischenlagen beim Palettieren von Gegenständen auf Paletten in einem Palettierautomaten sowie ein Verfahren zum Einbringen der Zwischenlagen in einen Palettierautomaten.
Bei den auf den Paletten anzuordnenden Gegenständen kann es sich im Sinne der Erfindung um alle Arten von in Schachteln oder sonstige Behältnisse verpackte Produkte handeln.

### II. Technischer Hintergrund

Es ist bekannt, automatische Palettiervorrichtungen, sogenannte Palettierautomaten, in Zusammenhang mit Produktionsmaschinen einzusetzen. Dabei werden die am Ende der Produktionsmaschine ausgeworfenen Produkte z.B. Briefhüllen von einem Verpackungsautomaten in Verpackungsschachteln oder sonstige Behältnisse transportsicher verpackt. Dem Verpackungsautomaten ist ein Palettierautomat nachgeschaltet, der einen Palettierroboter und eine Vorrichtung zum Wechseln der Paletten umfasst.
Der Palettierroboter übernimmt die von dem Verpackungsautomaten kommende Verpackungsschachtel und ordnet sie in einer platzsparenden und für den Transport stabilen Art und Weise auf einer Palette an, die zu diesem Zweck an einem dafür vorgesehenen Beladeplatz bereitgehalten wird.
Je nach Form der Verpackungsschachteln oder der Transportbehältnisse kann ein sicherer Verbund oder ein ausreichender Produktschutz nur erreicht werden, wenn Zwischenlagen zwischen eine oder mehrere Lagen gelegt werden.

Um z.B. bei Magazinschütten, oben offene Schachteln mit drei Seitenteilen, die Stabilität des Stapels zu erreichen werden Zwischenlagen mit Seitenklappen verwendet. Für andere Behältnisse kann auch eine flache Zwischenlage ausreichen.

Es ist bekannt das die Zwischenlagen mit und ohne Seitenklappen von entsprechenden Vorrichtungen automatisch in den Palettierprozess eingebracht werden. Die Zwischenlagen müssen dafür in einem Magazin ausgerichtet zur Verfügung gestellt werden.

Sind Zwischenlagen mit Seitenklappen erforderlich, werden die Seitenklappen in der Regel nach dem Palettieren und vor dem Einwickeln mit Folie von Hand gefaltet, wobei dies durch die Rückstellkraft der verwendeten Wellpappe sehr umständlich ist.

Bei einer automatischen Faltung werden daher alle vier Seiten umgeschlagen, die sich dann durch eine entsprechende formschlüssige Verbindung selber halten.

Da die Zwischenlagen aus Vollpappe und die Zwischenlagen aus Wellpappe mit Seitenklappen in der Regel mehrfach verwendet werden und meist nur grob gestapelt bzw. unzentriert auf einer Palette wieder an dem Palettierautomaten bereitgestellt werden, ist es nicht möglich, diese ohne zusätzlichen Arbeitsaufwand in den Prozess einzubringen.

### III Darstellung der Erfindung

### a) Technische Aufgabe

Es ist daher die Aufgabe der vorliegenden Erfindung, eine Vorrichtung zum Einbringen von Zwischenlagen beim Palettieren von Gegenständen auf Paletten in einem Palettierautomaten sowie ein Verfahren zum Einbringen der Zwischenlagen in einen Palettierautomaten zu schaffen, die, der bzw das unzentrierte Zwischenlagen aufnimmt, diese zentriert, zwei oder vier Seitenklappen faltet ohne diese formschlüssig verbinden zu müssen, die Zwischenlage anschließend auf dem Stapel zentriert ablegt und möglichst geringe Unterbrechungsdauem des Palettierprozesses ermöglicht.

### b) Lösung der Aufgabe

Diese Aufgabe wird mittels einer Vorrichtung mit den Merkmalen des Anspruches 1 bzw. mittels eines Verfahrens mit den Merkmalen des Anspruches 10 gelöst. Weitere Ausgestaltungen ergeben sich aus den Unteransprüchen.

Erfindungsgemäß wird zum Einbringen von Zwischenlagen eine Schwenkvorrichtung vorgeschlagen, die in einer ersten Stellung mit einer Hubvorrichtung eine Zwischenlage aufnimmt und in einer zweiten Stellung mit der gleichen Hubvorrichtung diese auf den gestapelten Produkten oder Verpackungsschachteln ablegt.
An der Schwenkvorrichtung ist die Hubvorrichtung, die Zentriervorrichtung sowie die Faltvorrichtungen befestigt. Für die Hubvorrichtung wie auch für die Zentriereinrichtung sind erfindungsgemäß positionsgenaue Antriebe erforderlich, die vorzugsweise mit Servomotoren angetrieben werden.

In der ersten Stellung wird die Hubvorrichtung auf einen Stapel, mit lose auf einer Palette liegenden Zwischenlagen, herabgelassen, bis ein Tastelement das Erreichen der Oberfläche meldet. Die oberste Zwischenlage wird von der Aufnahmevorrichtung, vorzugsweise Saugnäpfen, der Hubvorrichtung aufgenommen und auf Höhe der Zentriervorrichtung gehoben.

Gemäß der bevorzugten Ausführungsform besteht die Zentriervorrichtung aus zwei über kreuz angeordneten Führungseinrichtungen und den dazugehörigen Antrieben, vorzugsweise Spindelantrieben, mit denen jeweils zwei gegenüberliegende Anschläge, zusammen mit den Falteinheiten der erfindungsgemäßen Faltvorrichtung, zentrisch bewegt werden können. So wird vorteilhaft bewirkt, das verschiedenen Formate der Zwischenlagen angefahren und die Zwischenlagen in die zentrische Position bewegt werden können. Es sind keine Formatteile notwendig und somit entfallen bei Formatwechsel die Zeitaufwendigen Umbau- und Einstellarbeiten.

Die für die Zentrierfunktion notwendige Beweglichkeit der Hubvorrichtung wird erfindungsgemäß über deren Aufhängung gewährleistet, vorzugsweise vier Bändern. Erst nach dem Zentrieren wird die Zwischenlage von der beweglich aufgehängten Hubvorrichtung, die beim Zentrieren aus ihrer zentrischen Lage herausbewegt wird, an die Aufnahmevorrichtung der Zentriervorrichtung bzw. Faltvorrichtung übergeben.

Erfindungsgemäß wird die Zwischenlage von der Aufnahmevorrichtung mit Saugluftelementen so fest gehalten, das es möglich ist, die Seitenklappen der Zwischenlage mit den Falteinheiten zu falten. Die Falteinheiten sind drehbar gelagert und werden von winkeleinstellbaren Drehantrieben, wie beispielweise Drehzylinder oder Servomotor, angetrieben. So ist es in Vorteilhafterweise möglich, je nach Bedarf, zwei oder alle vier Seitenklappen zu falten, und den Drehwinkel des Antriebes unabhängig so einzustellen, dass sich nach dem Faltprozess ein bleibender Winkel zwischen 45-90° einstellt.

Die Aufhängung der Hubvorrichtung gewährleistet, dass nach der Übergabe der Zwischenlage an die Haltevorrichtung der Zentrier- und Faltvorrichtung, diese sich selbst mittels der Schwerkraft wieder in die zentrische Ursprungsposition zurück bewegt, um anschließend die Zwischenlage wieder zu übernehmen.
Zum Einbringen der Zwischenlage auf eine neue Lage Schachteln, bewegt sich der Palettierroboter aus dem Schwenkbereich der Vorrichtung und die Vorrichtung kann in ihre zweite Stellung bewegt werden, mittig über die Palette mit den angeordneten Schachteln. Die zentrierte oder die zentriert und gefaltete Zwischenlage wird vom Hubwerk so weit auf Ablagehöhe abgesenkt, bis sichergestellt ist, dass die Zwischenlage nach dem Freigeben aus der Haltevorrichtung wunschgemäß auf den Schachteln zum liegen kommt. Die Zwischenlage mit gefalteten Seitenklappen kann so Ungenauigkeiten des Lagebildes ausgleichen und kommt zentriert auf dem Stapel zum liegen, wenn der Faltwinkel kleiner 90° ist.
Anschließend wird die Vorrichtung aus dem Arbeitsbereich des Palettierroboters in den ersten Arbeitsbereich zurückbewegt.
Die Schutzeinrichtung bleibt während des ganzen Verfahrens geschlossen und der Bediener muss nur noch die Palette mit den unzentrierten Zwischenlagen nachfüllen, ohne diese Ausrichten zu müssen.

### c) Ausführungsbeispiel

Nachfolgend wird eine Ausführungsform der vorliegenden Erfindung beispielhaft anhand der Zeichnungen beschrieben. Es zeigen:
- Fig. 1: eine Aufsicht auf den Palettierautomaten mit der erfindungsgemäßen Vorrichtung zum Einbringen von Zwischenlagen
- Fig. 2: Seitenansicht der erfindungsgemäßen Vorrichtung im ersten Arbeitsbereich
- Fig. 3: Seitenansicht der erfindungsgemäßen Vorrichtung im zweiten Arbeitsbereich
- Fig. 4: Detailansicht Zentriervorrichtung mit Falteinrichtung
- Fig. 5: Detailansicht der Falteinheit mit Zwischenlage zum Falten einer Seitenklappe

### BEZUGSZEICHENLISTE

- 1: Schwenkvorrichtung
- 2: Hubvorrichtung
- 3: Erster Arbeitsbereich
- 4: Zweiter Arbeitsbereich
- 5: Flachriemen
- 6: Saugnäpfe
- 7: Zwischenlage
- 8: Drehpunkt
- 9: Haltevorrichtung
- 10: Zentriervorrichtung
- 11: Faltvorrichtung
- 12: Verpackungsschachteln
- 13: Palette
- 14: Schutzeinrichtung
- 15: Parkposition
- 16: Führung
- 17: Spindelantrieb
- 18: Servomotor
- 19: Seitenklappen
- 20: Riementrieb
- 21: Anschlag
- 22: Faltwerkzeug
- 23: Drehzylinder
- 24: Spindel
- 25: Palettierautomat
- 26: Falteinheit
- 27: Rollenbahn
- 28: Zuführplatz

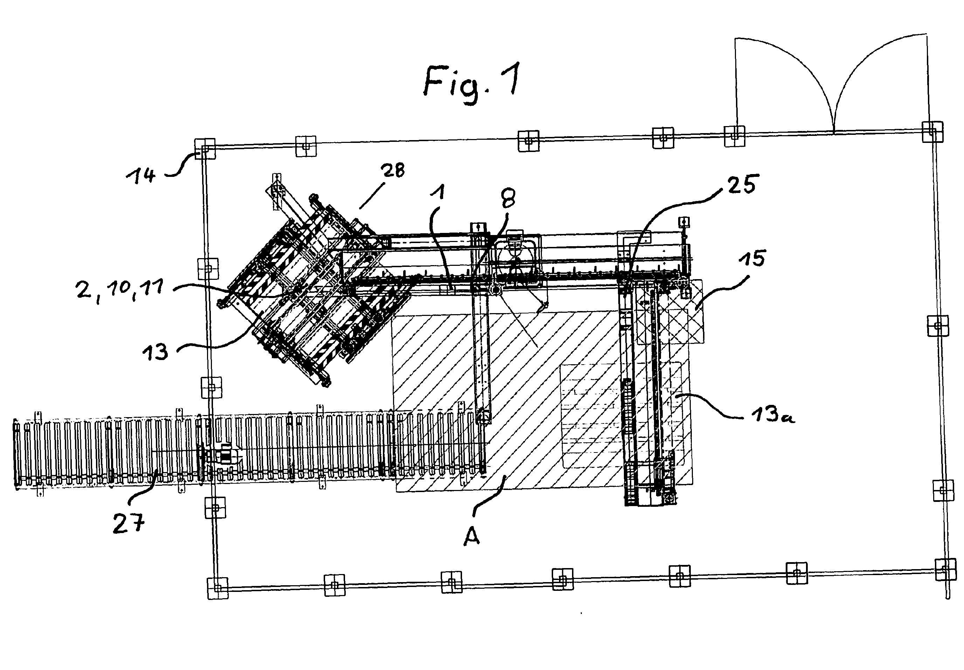

In der Aufsicht gemäß Fig. 1 ist die erfindungsgemäße Vorrichtung, der Palettierautomat 25 und die Rollenbahn 27 zur Zuführung der zu stapelnden Verpackungsschachteln 12 zu erkennen. Die Schwenkvorrichtung 1 mit der daran befestigten Hub- 2, Zentrier- 10 und Faltvorrichtung 11 ist in einem ersten Arbeitsbereich 3 positioniert. Eine Palette 13 mit den unzentrierten Zwischenlagen 7 steht grob ausgerichtet auf dem Zuführplatz 28. In der hier gezeigten Position der Vorrichtung wird die Zwischenlage 7 von der Hubvorrichtung 2 aufgenommen und an die Zentrier- 10 und Faltvorrichtung 11 übergeben. Um den festen Drehpunkt 8 wird die Vorrichtung in den zweiten Arbeitsbereich gedreht. Der Bereich A kennzeichnet den Arbeitsbereich des Palettierautomaten 25.

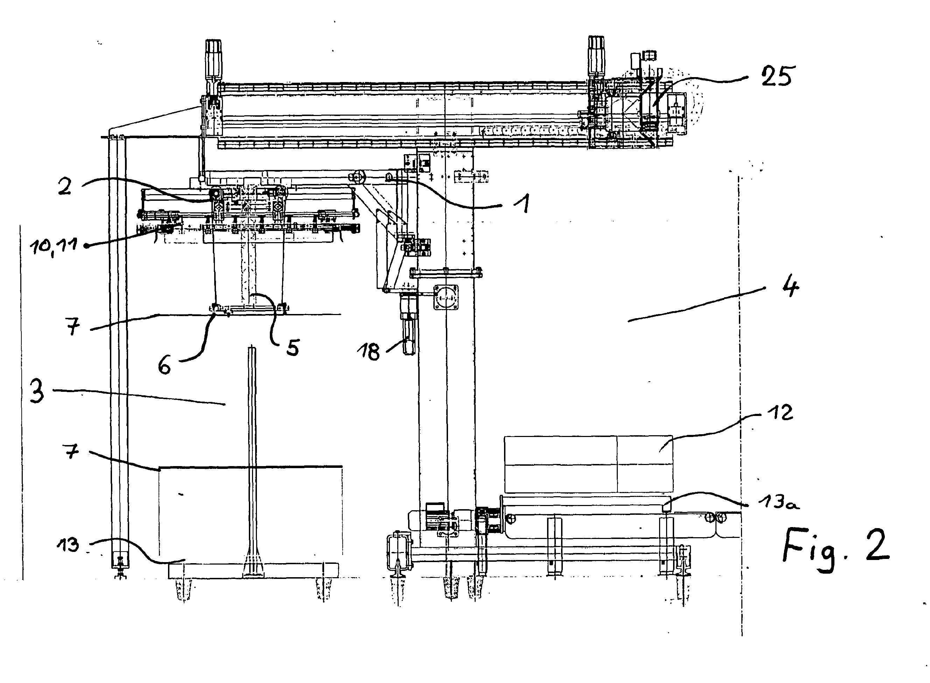

Die Fig. 2 zeigt eine Seitenansicht der erfindungsgemäßen Vorrichtung, des Palettierautomaten 25 und der Palette 13a die gerade beladen wird. Im ersten Arbeitsbereich 3 ist zu erkennen, wie die Hubvorrichtung 2 an den vier Flachriemen 5 hängend die Zwischenlage 7 mit den Saugnäpfen 6 aufgenommen hat. Die aufgenommene Zwischenlage 7 wird in den Zentrier- 10 und Faltvorrichtung 11 gehoben.

Diese sind wie auch die Hubvorrichtung 2 in der gezeigten Ausführungsform fest mit dem Schwenkarm 1 verbunden. Bei Bedarf kann die Zentrier- 10 und Falteinrichtung 11 auch beweglich an der Schwenkvorrichtung 1 befestigt werden.

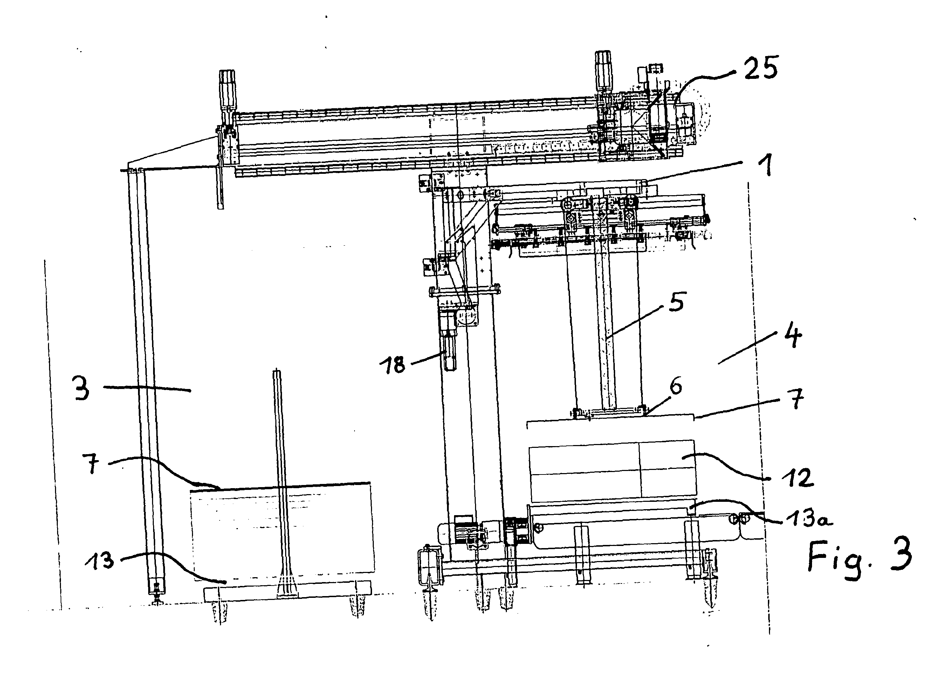

Die Fig. 3 zeigt die Seitenansicht der Vorrichtung im zweiten Arbeitsbereich 4. Sobald eine Lage mit z.B. Verpackungsschachteln 12 fertig gepackt ist, bewegt sich der Palettierautomat 18 in Parkposition 15 und die komplette Vorrichtung in den Arbeitsbereich 4 mittig über die Palette 13 mit den angeordneten Verpackungsschachteln 12. In dem Ausführungsbeispiel wird der Schwenkarm von einem Servomotor 18 bewegt. Zwischenzeitlich hat die Hubvorrichtung 6 die Zwischenlage 7 wieder von der Zentrier- und Faltvorrichtung übernommen und legt die Zwischenlage zentriert auf den Schachteln ab. Um die Palettierpause so klein wie möglich zu halten werden die Schwenk- und Absenkbewegung parallel ausgeführt.

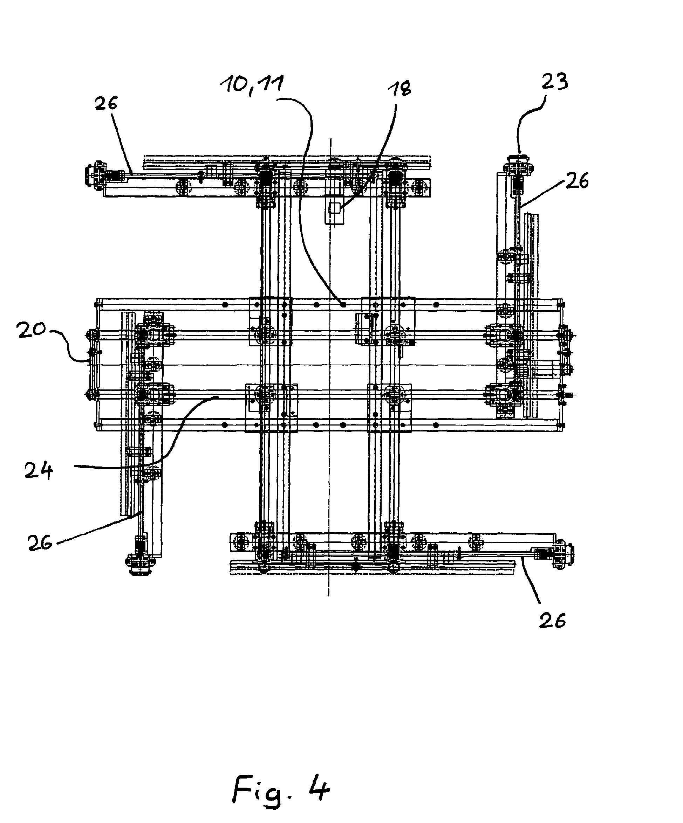

In Fig. 4 ist die gewählte Ausführungsform der Zentrier- und Faltvorrichtung gezeigt. Die erfindungsgemäße Zentrierfunktion wird mit den über Kreuz angeordneten Spindelantrieben 17 realisiert, welche vorzugsweise über Servomotoren 18a und entsprechenden Riemenantrieben 20 angetrieben werden. Über die gegenläufigen Spindelgewinde werden die Anschläge 21 zusammen mit den Falteinrichtungen 11 zentrisch zusammen oder auseinander bewegt. Alternativ kann für diese Bewegung auch jegliche Art von Linearantrieben verwendet werden. Durch die entsprechende Auslegung ist gewährleistet, dass die Hubvorrichtung zentrisch durch die Zentrier- und Faltvorrichtung bewegen kann.

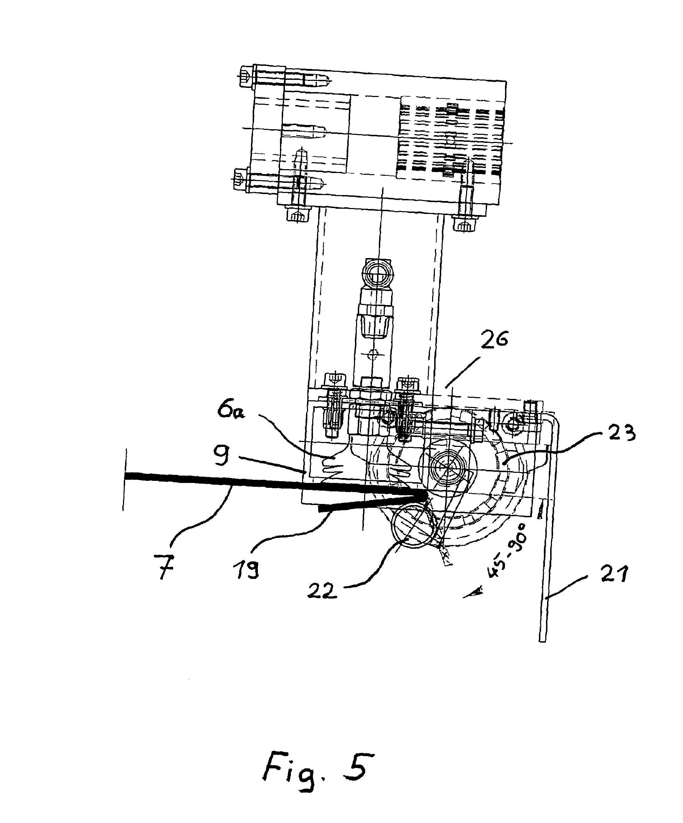

In Fig. 5 ist eine Einheit der Zentrier- und Faltvorrichtung gezeigt. Mit Hilfe des Anschlages 21 wird die Zwischenlage zentriert und anschließend von den Saugnäpfen 7 an der Haltevorrichtung 9 fixiert. Mit dem Drehzylinder 23 wird die Faltwerkzeug 22 gedreht und die Seitenklappe 19 umgeschlagen.
Der Winkel der Faltung ist dabei mit Hilfe der Verstellung des Drehwinkels am Drehzylinder beliebig einstellbar. Alternativ könnte die Drehbewegung auch durch andere Drehantrieb wie z.B. einen Servomotor realisiert werden.

Für spezielle Anwendungsfälle ist es denkbar das die Zentrier- und Faltvorrichtung unabhängig zur Hubeinrichtung absenkbar ist und dass die Seitenklappen erst auf der Lage gefaltet werden und /oder die Lage mit der Zentriereinrichtung ausgerichtet wird.
Zudem kann die Bewegung der Vorrichtung von ersten in den zweiten Arbeitsbereich auch durch entsprechende Lineareinheiten ausgeführt werden.

## Patentansprüche

1. Vorrichtung zum Einbringen von Zwischenlagen 7 beim Palettieren von Verpackungsschachteln 12 auf Paletten 13a in einem Palettierautomaten 25 **gekennzeichnet durch**
- einen ersten Arbeitsbereich 3 zur Aufnahme einer Zwischenlage 7 und einen zweiten Arbeitsbereich 4 zum Ablegen einer Zwischenlage 7,
- eine Hubvorrichtung 2,
- eine Zentriervorrichtung 10 und
- eine Faltvorrichtung 11
- wobei die Zwischenlage 7 in dem ersten Arbeitsbereich 3 von der Hubvorrichtung 2 in die Zentriervorrichtung 10 gehoben wird, von dieser zentriert und anschließend von einer Haltevorrichtung 9 übernommen wird, in welcher bei vorhandenen Seitenklappen 19 diese von der Faltvorrichtung 11 gefaltet werden können, um dann nach dem Zentrieren oder Zentrieren und Falten wieder von dem Hubwerk 2 übernommen zu werden, und in den zweiten Arbeitsbereich 4 bewegt wird und mittels der Hubvorrichtung 2 auf die dort vom Palett
- ierautomaten 25 gestapelten Verpackungsschachteln 12 legt wird.

2. Vorrichtung nach Anspruch 1,
**dadurch gekennzeichnet, dass**
eine Schwenkvorrichtung 1 die Hubvorrichtung 2 , die Zentriervorrichtung 10 und die Faltvorrichtung 11 von einen in den anderen Arbeitsbereich bewegt.

3. Vorrichtung nach Anspruch 1,
**dadurch gekennzeichnet, dass**
die Hubvorrichtung 2 horizontal auslenkbar und selbstzentrierend aufgehängt ist.

4. Vorrichtung nach Anspruch 1,
**dadurch gekennzeichnet, dass**
die Zentriervorrichtung 10 aus min. 4 Anschlägen 21 besteht, die über angetriebene Spindel bewegt werden

5. Vorrichtung nach Anspruch 1,
**dadurch gekennzeichnet,dass**
die Faltvorrichtung 11 mit der Zentriervorrichtung10 bewegt wird.

6. Vorrichtung nach Anspruch 4 und 5,
**dadurch gekennzeichnet,dass**
jeweils zwei Anschläge 21 und Falteinheiten 26 von einem Spindelantrieb 17 mit gegenläufigen Gewinde zentrisch bewegt werden und dass zwei Spindelantriebe 17 über Kreutz angeordnet sind.

7. Vorrichtung nach Anspruch 1,
**dadurch gekennzeichnet, dass**
die Zwischenlage 7 durch Saugluft an der Hubvorrichtung 2 und an der Haltevorrichtung 9 der Zentrier- 10 und Faltvorrichtung 11 gehalten wird.

8. Vorrichtung nach Anspruch 1,
**dadurch gekennzeichnet, dass**
die Faltvorrichtung 11 aus vier unabhängigen Falteinheiten 26 besteht, die über unabhängig einstellbare und ansteuerbare Drehantriebe bewegt werden.

9. Vorrichtung nach Anspruch 7
**dadurch gekennzeichnet,dass**
mit der Falteinrichtung 26 zwei oder vier Seitenklappen 19 so gefaltet werden können, dass die Seitenklappen 19 nach dem Falten in dem gewünschten Winkel zwischen 45 und 90° verbleiben.

10. Verfahren zum Einbringen von Zwischenlagen 7 beim Palettieren von Verpackungsschachteln 12 auf Paletten 13 in einem Palettierautomaten 25
**dadurch gekennzeichnet, dass**
eine unzentrierte Zwischenlage 7 in einer ersten Stellung 3 außerhalb des Arbeitsbereiches des Palettierautomaten 25 von einer Palette aufgenommen und zentriert wird, bei vorhandenen Seitenklappen 19 diese gefaltet werden und in einer zweiten Stellung 4 bei Bedarf zentriert auf die palettierten Verpackungsschachteln 12 abgelegt wird.

11. Verfahren nach Anspruch 10
**dadurch gekennzeichnet, dass**
die Zwischenlage 7 nach dem Aufnehmen mit der Hubvorrichtung 2 in einer Zentriervorrichtung 10 zentriert wird

12. Verfahren nach Anspruch 10
**dadurch gekennzeichnet, dass**
vorhandene Seitenklappen 19 an Zwischenlage 7 nach dem Zentrieren von einer Faltvorrichtung 11 gefaltet werden können.

13. Verfahren nach Anspruch 10
**dadurch gekennzeichnet, dass**
die Zwischenlage 7 nach dem Zentrieren von der Hubvorrichtung 2 abgegeben und von einer Haltevorrichtung 9 übernommen wird.

14. Verfahren nach Anspruch 10
**dadurch gekennzeichnet, dass**
die Zwischenlage 7 zum Ablegen auf die Produkte erneut in zentrierter Lage von der Hubvorrichtung 2 übernommen wird.

15. Verfahren nach Anspruch 10
**dadurch gekennzeichnet, dass**
die Faltvorrichtung 11 die Seitenklappen 19 der fixierten Zwischenlage 7 so weit faltet, dass die bleibende Stellung der Seitenklappe 19 einen Winkel zwischen 45und 90° aufweißt.

16. Verfahren nach Anspruch 10
**dadurch gekennzeichnet, dass**
bei Ungenauigkeiten des Lagebildes eine Zwischenlage 7 mit den gefalteten Seitenklappen auf den Stapel fallengelassen wird, so das diese sich mit Hilfe der Seitenklappen auf dem Stapel selbst zentriert.
